# EUROPÄISCHE PATENTSCHRIFT

(11) **EP 3 947 031 B1**
(45) Veröffentlichungstag und Bekanntmachung des Hinweises auf die Patenterteilung: **05.10.2022**
(21) Anmeldenummer: 20712281.3
(22) Anmeldetag: 16.03.2020
(51) Int. Cl.: B60N 2/235

(54) **BESCHLAGANORDNUNG MIT ABGEDICHTER LAGERBUCHSE**
FITTING ARRANGEMENT HAVING SEALED BEARING BUSH
SYSTÈME D'ARMATURE AVEC BUSELURE ÉTANCHÉIFIÉE

(30) Priorität: 28.03.2019 DE 102019204339
(43) Veröffentlichungstag der Anmeldung: 09.02.2022
(73) Patentinhaber: Brose Fahrzeugteile SE & Co. Kommanditgesellschaft, Coburg, 96450 Coburg (DE)
(72) Erfinder: SCHUKALSKI, Jürgen, 96238 Küps (DE); HOFMANN, Jochen, 96257 Marktgraitz (DE); HAUSMANN, Peter, 96450 Coburg (DE)
(74) Vertreter: Maikowski & Ninnemann Patentanwälte Partnerschaft mbB
(86) Internationale Anmeldenummer: PCT/EP2020/057048
(87) Internationale Veröffentlichungsnummer: WO 2020/193245

(56) Entgegenhaltungen:
- WO-A2-2011/029521
- DE-A1-102008 028 101

## Beschreibung

Die vorgeschlagene Lösung betrifft eine Beschlaganordnung für einen Fahrzeugsitz sowie ein Montageverfahren für eine Beschlaganordnung.

Beschlaganordnung für Fahrzeugsitze sind in der Praxis in unterschiedlichen Ausführungsvarianten weithin bekannt, zum Beispiel als Drehbeschläge oder Rastbeschläge. Beispielsweise offenbart die DE 10 2009 022 777 A1 eine Beschlaganordnung in Form eines Rastbeschlags, bei dem zwischen zwei Beschlagteilen ein Lagerraum definiert ist, in dem insbesondere mehrere Verriegelungselemente in Form von Sperrriegeln angeordnet sind. Diese Sperrriegel sind radial bezogen auf eine Verstellachse zwischen einer Entriegelungsposition und einer Verriegelungsposition verstellbar. In der Verriegelungsposition greifen die an dem einen Beschlagteil radial verschieblich geführten Sperrriegel in eine Verzahnung des anderen Beschlagteils ein, um die beiden Beschlagteile drehfest miteinander zu verbinden. In der Verriegelungsposition ist über den Rastbeschlag beispielsweise eine Rückenlehne eines Fahrzeugsitzes in ihrer eingenommen Relativlage zu einem Sitzunterteil fixiert. Sind die Sperrriegel in eine Entriegelungsposition radial nach innen verlagert, sind die beiden Beschlagteile relativ zueinander verschwenkbar. Eine Rückenlehne ist dann beispielsweise relativ zu dem Sitzunterteil in ihrer Neigung einstellbar.

Um zwischen der Entriegelungsposition und der Verriegelungsposition der Verriegelungselemente in Form der Sperrriegel zu wechseln, ist mindestens ein Verstellteil vorgesehen. Bei einem Rastbeschlag entsprechend der DE 10 2009 022 777 A1 wird beispielsweise eine Verstellung der Sperrriegel in eine Verriegelungsposition, um eine Verzahnung des Sperrriegel mit einer Innenverzahnung eines Beschlagteil in Eingriff zu bringen, mithilfe eines Verstellteils in Form einer Nockenscheibe vorgesehen. Ergänzt kann ein zusätzliches Verstellteil vorgesehen sein, um die Sperrriegel aus einer Verriegelungsposition in die Entriegelungsposition zu überführen. Ein solches zweites Verstellteil wird beispielsweise durch eine Steuer- oder Kulissenscheibe gebildet. In Führungskulissen einer solchen Kulissenscheibe greifen Führungszapfen oder Führungsstege der Sperrriegel ein, sodass die Sperrriegel bei Drehung der Kulissenscheibe radial nach innen verlagert werden, wenn über die Nockenscheibe einer derartigen Verstellung nicht mehr entgegengewirkt wird.

Bei bisher in der Praxis eingesetzten Beschlaganordnungen stellt sich häufig die Schwierigkeit, dass diese nicht ohne weiteres lackierbar sind. Beispielsweise ist eine Tauchbadlackierung regelmäßig erschwert, da eventuell in den die verstellbaren Komponenten lagernden Lagerraum der Beschlaganordnung eindringender Lack zu einem Verkleben führen kann und die Funktionsfähigkeit der Beschlaganordnung beeinträchtigt. Besonders problematisch ist die Lackeindringung zudem, wenn eine Relativbewegung zwischen Verstellteilen, wie einer Nockenscheibe und einer Kulissenscheibe, benötigt wird, um die Funktion der Beschlaganordnung sicherzustellen. Zwar ist es bekannt, an entsprechenden Stellen axial wirkende Dichtungen vorzusehen. Regelmäßig ist hiermit aber die Montage erheblich erschwert und dennoch eine Tauchbadlackierung nicht ohne weiteres möglich. In dieser Hinsicht beschreibt zwar die DE 10 2008 024 052 A1 bereits einen Ansatz mit Axialspalte an einer Beschlaganordnung abdichtenden elastischen Dichtelementen. Hierbei wird zumindest in Kauf genommen, dass bei einer Tauchbadlackierung Lack an die Nockenscheibe und insbesondere eine Durchgangsöffnung der Nockenscheibe gelangt, an der eine Betätigungswelle aufgenommen werden soll.

Eine weitere Beschlaganordnung für einen Fahrzeugsitz ist aus der WO 2011/029521 A2 bekannt.

Vor diesem Hintergrund liegt der vorgeschlagenen Lösung die Aufgabe zugrunde, eine in dieser Hinsicht verbesserte Beschlaganordnung bereitzustellen.

Diese Aufgabe ist sowohl mit einer Beschlaganordnung nach Anspruch 1 als auch mit einem Montageverfahren nach Anspruch 12 gelöst.

Eine vorgeschlagene Beschlaganordnung sieht hierbei vor, dass mindestens ein innerhalb des Lagerraums der Beschlaganordnung angeordnetes Verstellteil für die Betätigung des mindestens einen Verriegelungselement an einem Buchsenelement der Beschlaganordnung gelagert ist und auf dieses Buchsenelement ein zur Abdichtung des Lagerraums vorgesehenes Deckelelement, bezogen auf einer Verstellachse, um die das Verstellteil verstellbar ist, axial aufgesteckt ist.

Über eine entsprechende Buchsenbaugruppe mit einem Buchsenelement und einem hieran dichtend aufgesteckten Deckelelement lässt sich die Montage der Beschlaganordnung vergleichsweise einfach gestalten und gezielt verhindern, dass im Bereich des verstellbar zu lagernden Verstellteils störende Flüssigkeit, insbesondere flüssiger Lack eindringt. An dem Buchsenelement können somit ein Verstellteil oder mehrere (mindestens zwei) Verstellteile angeordnet werden und über das aufgesteckte Deckelelement eine Abdichtung des Lagerraums und des mindestens einen Verstellteils erreicht werden, um den Lagerraum innerhalb der Beschlaganordnung und das mindestens eine Verstellteil gegen eindringende Flüssigkeit zu schützen.

Dementsprechend sieht beispielsweise eine Ausführungsvariante vor, dass über eine äußere Kontur eines Abschnitts des Buchsenelements, an dem das Deckelelement aufgesteckt ist, und eine innere Kontur eines Abschnitts des Deckelelements, mit dem das Deckelelement an das Buchsenelement gesteckt ist, eine Dichtfläche ausgebildet ist, über die ein Eindringen von Flüssigkeit, insbesondere von flüssigem Lack an dem Buchsenelement entlang zu dem Verstellteil verhindert ist. An einer Kontaktfläche zwischen dem aufgesteckten Deckelelement und dem das Verstellteil oder die Verstellteile lagernden Buchsenelement ist somit eine Dichtfläche ausgebildet, über die hinweg keine Flüssigkeit gelangen kann. Dies schließt insbesondere ein, dass die derart ausgebildete Beschlaganordnung bei einer Tauchbadlackierung vor einem Eindringen von Lack in das Innere der Beschlaganordnung und insbesondere an das mindestens eine Verstellteil geschützt ist. Eine Verklebung eines Verstellteils an anderen Komponenten innerhalb des Lagerraums durch eingedrungenen Lack ist somit zuverlässig verhindert.

Beispielsweise kann sich die innere Kontur einer Durchgangsöffnung des an das Buchsenelement gesteckten Abschnitts des Deckelelements an mindestens einem Bereich bezogen auf die Verstellachse radial verjüngen, insbesondere konisch verjüngen. Hiermit wird eine dichtende Presspassung zwischen dem Buchsenelement und dem Deckelelement unterstützt. Durch die entsprechende Geometrie des Buchsenelements und des Deckelelements kann hierbei beispielsweise bereits eine vergleichsweise geringe und gegebenenfalls auch manuell aufgebrachte Montagekraft ausreichen, um eine dichtende Verbindung zwischen dem Buchsenelement und dem Deckelelement sicherzustellen. Eine radiale Verjüngung schließt hierbei insbesondere ein, dass ein mit einer Durchgangsöffnung versehener Abschnitt des Deckelelements, über den das Deckelelement an das Buchsenelement gesteckt wird, eine Innenwandung mit einer inneren Kontur aufweist, die an mindestens einer Stelle einen kleineren Querschnitt ausbildet als eine äußere Kontur eines Abschnitts des Buchsenelements, auf den das Deckelelement gesteckt wird.

Das Deckelelement liegt zur axialen Spielfreimachung an dem mindestens einen Verstellteil an. Das Deckelelement ist hier folglich gegen ein angrenzendes Verstellteil gedrückt, um ein axiales Spiel des Verstellteils auszuschließen. Bei der Montage wird somit das Deckelelement dann beispielsweise in axialer Richtung gegen das bereits an dem Buchsenelement angeordnete Verstellteil gedrückt, sodass zwischen dem Verstellteil und dem Deckelelement kein Spiel in (bezogen auf die Verstellachse) axialer Richtung vorhanden ist.

In einer Ausführungsvariante ist an dem Buchsenelement und/oder dem Deckelelement mindestens ein Dichtelement angeordnet. Ein solches zusätzliches Dichtelement dient zum Beispiel der Abdichtung gegenüber einem zugeordneten Beschlagteil der Beschlaganordnung. So liegt dann beispielsweise mindestens ein Dichtelement an einem Lagerabschnitt des Buchsenelements oder des Deckelelement einerseits und einer Lagerfläche eines zugeordneten Beschlagteils andererseits an. Ein Lagerabschnitt des Buchsenelements oder des Deckelelements kann hierbei beispielsweise kragenförmig, stegförmig oder ringförmig und insbesondere in Form eines um die Verstellachse umlaufenden Absatzes ausgebildet sein. An einem derartigen Lagerabschnitt stützt sich dann ein entsprechendes, z.B. elastisch ausgebildetes Dichtelement in einer ersten axialen Richtung entlang der Verstellachse ab, während es sich in einer entgegengesetzten axialen Richtung an der Lagerfläche des zugeordneten Beschlagteils abstützt und damit das Eindringen von Flüssigkeit, insbesondere Lack über einen eventuellen Spalt zwischen einem Beschlagteil und der mit dem Buchsenelement und dem Deckelelement gebildeten Buchsenbaugruppe in den Lagerraum verhindert.

In einer Weiterbildung ist mindestens ein erstes Dichtelement vorgesehen, das an einem Lagerabschnitt des Buchsenelements und an der (z.B. gegenüberliegenden) Lagerfläche eines ersten Beschlagteil der zwei Beschlagteile anliegt, während mindestens ein zweites Dichtelement an dem Lagerabschnitt des Deckelelements und an der Lagerfläche des zweiten Beschlagteils anliegt. Über das erste Dichtelement ist somit eine Abdichtung an dem Buchsenelement zu dem ersten Beschlagteil vorgesehen. Über das zweite Dichtelement ist demgegenüber eine Abdichtung des Deckelelements zu dem zweiten Beschlagteil vorgesehen.

Die Lagerfläche des ersten oder zweiten Beschlagteils, an dem sich ein Dichtelement abstützt, ist in einer Ausführungsvariante (jeweils) dem Lagerraum zugewandt. So ist dann die Lagerfläche an einer dem Lagerraum zugewandten Innenseite des jeweiligen Beschlagteils ausgebildet. Über die dichtende Verbindung zwischen dem Buchsenelement und dem Deckelelement einerseits sowie die Dichtungselemente zwischen dem Buchsenelement und dem ersten Beschlagteil sowie dem Deckelelement und dem anderen, zweiten Beschlagteil andererseits kann der Lagerraum vollständig nach außen abgedichtet sein, ohne dass hierdurch ein Montageaufwand für den Zusammenbau der Beschlaganordnung signifikant erhöht würde.

Ein Dichtelement kann hierbei grundsätzlich als separat gefertigtes Bauteil ausgebildet sein. Alternativ kann ein Dichtelement an einem Buchsenelement, Deckelelement oder Beschlagteil ausgeformt oder hieran angeformt sein, beispielsweise in dem die jeweilige Komponente als Mehrkomponentenbauteil ausgebildet oder in einem Mehrkomponentenspritzgießverfahren oder Mehrkomponenten-3D-Druckverfahren hergestellt ist. Ein Dichtelement kann beispielsweise einen Dichtring aufweisen. Der Dichtring kann beispielsweise um die Verstellachse umlaufend ausgebildet sein und als separat gefertigtes Bauteil während der Montage entsprechend angeordnet werden oder an einer entsprechende Komponente ausgeformt oder an eine entsprechende Komponente angeformt sein.

In einer Ausführungsvariante steht das Deckelelement in axialer Richtung nicht an der Beschlaganordnung vor. Das Deckelelement ist hierbei dann beispielsweise vollständig innerhalb einer Durchgangsöffnung an einem zugeordneten Beschlagteil aufgenommen. Alternativ oder ergänzend kann das Buchsenelement vollständig innerhalb einer Durchgangsöffnung an einem zugeordneten (anderen) Beschlagteil der Beschlaganordnung aufgenommen sein, sodass das Buchsenelement in axialer Richtung nicht an der Beschlaganordnung vorsteht. Das jeweilige eines der Elemente der Buchsenbaugruppe aufnehmende Beschlagteil bildet somit in axialer Richtung die Stirnseite der Beschlaganordnung aus und definiert damit die maximale axiale Erstreckung der Beschlaganordnung.

Für die Kopplung der Beschlaganordnung mit einem Betätigungselement, z.B. in Form einer Betätigungswelle, weist die Beschlaganordnung in einer Ausführungsvariante ein Buchsenelement auf, dass eine Wellenöffnung für die formschlüssige Verbindung mit dem Betätigungselement definiert. In einem bestimmungsgemäß an einen Fahrzeugsitz montierten Zustand greift dann beispielsweise ein Betätigungselement formschlüssig in die durch das Buchsenelement definierte Wellenöffnung der Beschlaganordnung ein, um durch Drehung die Beschlaganordnung bei Bedarf zu entsperren. Durch Drehung des Betätigungselements ist das mindestens eine Verstellteil im Lagerraum der Beschlaganordnung verschwenkbar, wobei die entsprechende Schwenkbewegung zu einer Einwirkung auf das mindestens eine Verriegelungselement der Beschlaganordnung führt, um eine Verlagerung der beiden Beschlagteile relativ zueinander zuzulassen. Indem die Beschlagteile im bestimmungsgemäß an einen Fahrzeugsitz montierten Zustand unterschiedlichen, relativ zueinander verstellbaren Baugruppen des Fahrzeugsitzes zugeordnet und hieran festgelegt sind, beispielsweise einer Rückenlehne einerseits und einem Sitzunterbau andererseits, wird hierüber dann eine Verlagerung dieser Baugruppen relativ zueinander gestattet.

Für die formschlüssige Verbindung mit einem Betätigungselement kann das Buchsenelement im Querschnitt eine Außenkontur mit mindestens zwei radial vorspringenden Formschlussbereichen aufweisen. Das Vorsehen derartiger radial vorspringender Formschlussbereiche unterstützt beispielsweise eine prozesssichere Anbindung des Betätigungselements an die Beschlaganordnung, sodass das Betätigungselement nur in einer bestimmten Orientierung zu der entsprechenden Wellenöffnung in die Wellenöffnung einführbar ist.

Grundsätzlich kann die Beschlaganordnung mit den zwei Beschlagteilen, dem mindestens einen Verriegelungselement, dem mindestens einen Verstellteil und einer Buchsenbaugruppe mit dem Buchsenelement und dem Deckelelement eine vormontierte Baueinheit bilden. Eine solche vormontierte Baueinheit ist dann zur Montage an einen Fahrzeugsitz respektive zwei miteinander zu verriegelnde und bei Bedarf relativ zueinander verstellbare Sitzkomponente oder Baugruppen des Fahrzeugsitzes vorgesehen. So kann die Beschlaganordnung eine vormontierte und auf bestimmungsgemäße Funktion vorprüfbare Baueinheit bilden, die an eine Rückenlehne und einen Sitzunterbau des Fahrzeugsitzes zu montieren ist, um die Rückenlehne mit dem Sitzunterbau zu verriegeln, wenn sich das mindestens eine Verriegelungselement in seiner Verriegelungsposition befindet, und eine Einstellung der Neigung der Rückenlehne relativ zu dem Sitzunterbau zu gestatten, wenn sich das mindestens eine Verriegelungselement in seiner Entriegelungsposition befindet.

Ein weiterer Aspekt der vorgeschlagenen Lösung betrifft ein Verfahren zur Montage einer Beschlaganordnung für einen Fahrzeugsitz.

Das vorgeschlagene Verfahren sieht hierbei wenigstens die folgenden Schritte vor:
- Bereitstellen eines ersten Beschlagteil, eines zweiten Beschlagteils, mindestens eines Verriegelungselements, mindestens eines Verstellteils und einer Buchsenbaugruppe mit einem Buchsenelement und einem Deckelelement,
- Anordnen des Buchsenelements in einer Durchgangsöffnung des ersten Beschlagteils,
- Anordnen des mindestens einen Verriegelungselements an dem ersten Beschlagteil und des mindestens einen Verstellteils an dem Buchsenelement derart, dass über eine Drehung des mindestens einen Verstellteils um eine durch das Buchsenelement definierte Verstellachse das mindestens eine Verriegelungselement zwischen einer Entriegelungsposition und einer Verriegelungsposition radial verstellbar ist,
- Anstecken des Deckelelements an das Buchsenelement entlang der Verstellachse und
- Anordnen des zweiten Beschlagteils an dem ersten Beschlagteil unter Ausbildung eines Lagerraums zwischen dem ersten Beschlagteil und dem zweiten Beschlagteil, in dem das mindestens eine Verriegelungselement und das mindestens eine Verstellteil aufgenommen sind.

Die wenigstens zweiteilige Buchsenbaugruppe zur Lagerung des mindestens einen Verstellteils ermöglicht dabei einen vergleichsweise einfachen Montageprozess und stellt, bei einem an das Buchsenelement aufgepressten Deckelelement eine Abdichtung sicher, sodass eine entsprechende Beschlaganordnung anschließend auch über eine Tauchbadlackierung lackiert werden kann, ohne befürchten zu müssen, das über in den Lagerraum eindringenden Lack innerhalb des Lagerraum verstellbar gelagerte Komponenten der Beschlaganordnung verkleben.

Insbesondere kann für das Aufpressen des Deckelelements an das Buchsenelement vorgesehen sein, dass das Deckelelement aus einem Material besteht, dass weniger steif ist als das Material, aus dem das Buchsenelement besteht. Dementsprechend kann das Deckelelement beim Aufpressen gezielt verformt und insbesondere im Bereich einer Kontaktstelle zwischen dem Deckelelement und dem Buchsenelement abgeflacht werden, um eine Dichtfläche auszubilden. Die Ausbildung der Dichtfläche und damit eines flächigen Kontakt zwischen Deckelelement und Buchsenelement hängt aber nicht von einer Verformbarkeit des Deckelelements ab.

Ein Abschnitt des Deckelelements, über den das Deckelelement an das Buchsenelement gesteckt ist, kann bei der Anordnung des zweiten Beschlagteils an dem ersten Beschlagteil in einer Durchgangsöffnung des zweiten Beschlagteils aufgenommen werden.

Das Deckelelement kann beispielsweise unter elastischer Verformung sowohl des Deckelelements als auch des Buchsenelements aufgepresst werden. Alternativ kann das Deckelelement unter plastischer Deformation mindestens eines an dem Deckelelement oder dem Buchsenelement ausgebildeten Abschnitts aufgepresst werden. Beispielsweise ist der plastisch zu deformierende Abschnitt als Quetschkontur oder Schaberippe an dem Deckelelement oder dem Buchsenelement ausgebildet, insbesondere als sich umfangsseitig erstreckende oder umfangseitig vollständig um die Verstellachse umlaufende Quetschkontur oder Schaberippe.

Das Deckelelement wird bis zu einem an dem Buchsenelement definierten Anschlag aufgepresst. Das Buchsenelement begrenzt somit das Maß, um das das Deckelelement an dem Buchsenelement bis zum Erreichen einer bestimmungsgemäßen Verbindungslage verlagert werden kann.

Das Deckelelement wird an dem Buchsenelement gegen ein Verstellteil gepresst, um ein axiales Spiel zu vermeiden. Das Aufpressen des Deckelelements führt somit zu einer Spielfreimachung innerhalb der Beschlaganordnung.

Zwischen dem ersten Beschlagteil und dem Buchsenelement kann mindestens ein (erstes) Dichtelement angeordnet werden, um eine (zusätzliche) Abdichtung zwischen dem Beschlagteil und dem Buchsenelement zu erreichen. Alternativ oder ergänzend kann zwischen dem Deckelelement und dem zweiten Beschlagteil mindestens ein (zweites) Dichtelement angeordnet werden.

Ein vorgeschlagenes Montageverfahren kann hierbei insbesondere zur Montage einer vorgeschlagenen Beschlaganordnung vorgesehen sein. Dementsprechend gelten vorstehend und nachstehend erläuterte Vorteile und Merkmale von Ausführungsvarianten einer vorgeschlagenen Beschlaganordnung auch für Ausführungsvarianten eines vorgeschlagenen Montageverfahrens und umgekehrt.

Grundsätzlich kann eine vorgeschlagene Beschlaganordnung hierbei als Rastbeschlag ausgebildet sein. Insbesondere vor diesem Hintergrund kann es sich beispielsweise bei einem Verstellteil um eine Nockenscheibe oder eine Kulissenscheibe handeln. Über eine Nockenscheibe kann das mindestens eine Verriegelungselement der Beschlaganordnung, beispielsweise in Form eines Sperrriegels, bezogen auf die Verstellachse radial nach außen in die Verriegelungsposition gedrängt werden, in der das Verriegelungselement mit dem einen (zweiten) Beschlagteil durch Eingriff in eine an dem Beschlagteil ausgebildete Gegenverzahnung verriegelt ist. Über eine Kulissenscheibe (als zusätzliches Verstellteil) kann wiederum eine Verstellbewegung des mindestens einen Verriegelungselements bezogen auf die Verstellachse radial nach innen in die Entriegelungsposition steuerbar sein, um die beiden Beschlagteile relativ zueinander freizugeben und deren Verschwenkbarkeit relativ zueinander um die Verstellachse zu gestatten.

Die beigefügten Figuren veranschaulichen exemplarisch mögliche Ausführungsvarianten der vorgeschlagenen Lösung.

Hierbei zeigen:
- Figur 1: in Seitenansicht eine Ausführungsvariante einer vorgeschlagenen Beschlaganordnung;
- Figur 1A: die Beschlaganordnung der Figur 1 in einer Schnittansicht gemäß der Schnittlinie A-A der Figur 1;
- Figur 2: in mit der Figur 1A übereinstimmender Ansicht die Beschlaganordnung;
- Figur 2B: die Beschlaganordnung der Figur 2 entlang der Schnittlinie B-B der Figur 2;

- Figur 3: einen vergrößerten Ausschnitt der Schnittdarstellung der Figur 2B mit Blick auf eine Buchsenbaugruppe;
- Figur 4A: in Schnittansicht die Beschlaganordnung mit einer Lagerbuchse und einem hieran unter elastischer Verformung aufgepressten Buchsendeckel;
- Figur 4B: in Schnittansicht die Beschlaganordnung mit einer Lagerbuchse und einem hieran unter plastischer Verformung aufgepressten Buchsendeckel;
- Figur 5A: in vergrößertem Maßstab und in Schnittansicht ausschnittsweise einen Verbindungsbereich zwischen der Lagerbuchse und dem hieran unter elastischer Verformung aufgepressten Buchsendeckel der Figur 4A;
- Figur 5B: in vergrößertem Maßstab und in Schnittansicht ausschnittsweise einen Verbindungsbereich zwischen der Lagerbuchse und dem hieran unter plastischer Verformung aufgepressten Buchsendeckel der Figur 4B
- Figur 6: den Buchsendeckel der Beschlaganordnung der Figuren 4A und 5A mit hieran ausgeformter und umfangsseitig umlaufender Querkontur während der Montage;
- Figur 7: den Buchsendeckel der Beschlaganordnung der Figuren 4A und 5A im montierten Zustand.

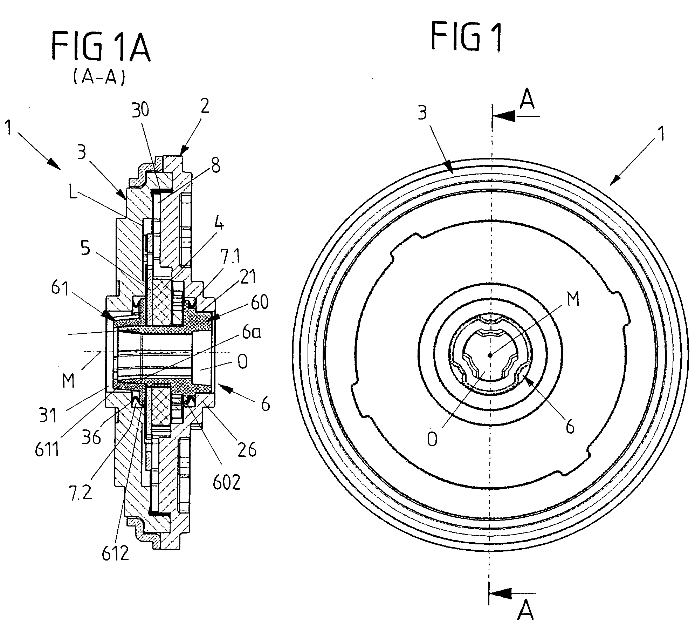

Die Figuren 1 bis 3 veranschaulichen in unterschiedlichen Ansichten eine Ausführungsvariante einer vorgeschlagenen Beschlaganordnung in Form eines Rastbeschlags 1. Dieser Rastbeschlag 1 ist für einen Fahrzeugsitz vorgesehen, um eine Rückenlehne an dem Fahrzeugsitz relativ zu einem Sitzunterbau des Fahrzeugsitzes verriegeln und in einem verriegelten respektive verrasteten Zustand halten zu können. Bei Betätigung des Rastbeschlags ist eine Entriegelung möglich, um eine Neigungsverstellung der Rückenlehne bezüglich des Sitzunterbaus zu gestatten. Typischerweise werden zwei Rastbeschläge an einander gegenüberliegenden Längsseiten des Fahrzeugsitzes vorgesehen, sodass die Rastbeschläge bezogen auf eine Schwenkachse der Rückenlehne axial zueinander versetzt an dem Fahrzeugsitz angeordnet sind. Um eine synchrone Betätigung beider Rastbeschläge zu erreichen, sind diese beispielsweise über eine Betätigungswelle mechanisch miteinander gekoppelt.

Der Rastbeschlag 1 der Figuren 1 bis 3 weist zwei miteinander verbundene Beschlagteile in Form einer Führungsplatte 2 und einer Zahnplatte 3 auf. Eines der Beschlagteile 2, 3 wird an der Rückenlehne oder dem Sitzunterbau festgelegt und das andere Beschlagteil 3, 2 an der anderen Komponente oder Baugruppe des Fahrzeugsitzes, sodass über eine relative Verlagerung der beiden Beschlagteile 2, 3 eine Verstellung der jeweiligen Komponenten des Fahrzeugsitzes relativ zueinander gestattet ist.

An der Führungsplatte 2 sind radial bezüglich einer Verstellachse M, um die die beiden Beschlagteile 2,3 relativ zueinander schwenkbar sind, Verriegelungselemente 8, zum Beispiel in Form von Sperrriegeln, verstellbar geführt. Über ein erstes Verstellteil in Form einer Nockenscheibe 4 werden diese Verriegelungselemente 8, die um die Verstellachse M verteilt an der Führungsplatte 2 vorgesehen sind, in Eingriff mit einer Innenverzahnung 30 der Zahnplatte 3 gedrängt. An einem Verriegelungselement 8 ausgebildete Rastzähne stehen dann mit der Innenverzahnung 30 der Zahnplatte 3 in Eingriff und verriegeln damit die Führungsplatte 2 und die Zahnplatte 3 drehfest miteinander.

Über ein weiteres, zweites Verstellteil in Form einer als Kulissenscheibe 5 ausgebildeten Steuerscheibe können die Verriegelungselemente 8 radial nach innen verlagert werden, um die Verriegelungselemente 8 außer Eingriff mit der Innenverzahnung 30 der Zahnplatte 3 zu bringen. In einer derart eingenommenen Entriegelungsposition der Verriegelungselemente 8 können die beiden Beschlagteile 2 und 3 relativ zueinander um die Verstellachse M geschwenkt werden.

In der dargestellten Ausführungsvariante sind sowohl die Nockenscheibe 4 als auch die Kulissenscheibe 5 an einer zweiteiligen Buchsenbaugruppe 6 gelagert. Diese Buchsenbaugruppe 6 weist ein Buchsenelement in Form einer Lagerbuchse 60 auf, an der die Nockenscheibe 4 und die Kulissenscheibe 5 vorgesehen sind. Über ein Deckelelement in Form eines Buchsendeckels 61 des Buchsenbaugruppe 6 ist eine Abdichtung hergestellt, um zu verhindern, dass entlang der Lagerbuchse 60 Flüssigkeit und insbesondere aus einer Tauchbadlackierung stammender Lack zu der Nockenscheibe 4 und der Kulissenscheibe 5 gelangen kann. Die Nockenscheibe 4 und die Kulissenscheibe 5 sind hierbei zusammen mit den Verriegelungselementen 8 innerhalb eines Lagerraums L vorgesehen, der zwischen den beiden Beschlagteilen 2 und 3 ausgebildet ist. Würde bei einer Tauchbadlackierung Lack in diesen Lagerraum L gelangen, nachdem der Rastbeschlag 1 vormontiert wurde, könnte dies zu einem unerwünschten Verkleben der Nockenscheibe 4 und der Kulissenscheibe 5 führen. Über die zweiteilige Buchsenbaugruppe 6 ist dies ausgeschlossen, ohne hierbei auf eine besonders einfache Montierbarkeit des Rastbeschlags 1 verzichten zu müssen.

So wird zunächst die Lagerbuchse 60, die beispielsweise aus Kunststoff gefertigt ist, in eine zentrale Durchgangsöffnung 21 der Führungsplatte 2 eingesetzt. Hierbei ist zwischen einem kragenförmig radial vorstehenden Absatz der Lagerbuchse 60, der als buchsenseitiger Lagerabschnitt 602 dient, und einer dem Lagerraum L zugewandten und um die Durchgangsöffnung 21 umlaufenden Lagerfläche 26 der Führungsplatte 2 ein erstes Dichtungselement in Form eines Dichtungsrings 7.1 aufgenommen. Wurden an der Lagerbuchse 60 die Nockenscheibe 4 und die Kulissenscheibe 5 vorgesehen und die Verriegelungselemente 8 bestimmungsgemäß an der Führungsplatte 2 gelagert, wird der Buchsendeckel 61 auf einen längserstreckten Hülsenabschnitt 601 der Lagerbuchse 60 aufgepresst. Der Buchsendeckel 61 weist hierfür einen Fixierungsabschnitt 611 mit einer Durchgangsöffnung auf, deren Innendurchmesser und Innenkontur auf den Außendurchmesser und die Außenkontur des Hülsenabschnitt 601 der Lagerbuchse 60 abgestimmt ist. Der Buchsendeckel 61 wird hierbei in axialer Richtung auf die Kulissenscheibe 5 zu aufgeschoben, bis über einen lokal reduzierten Innendurchmesser des Fixierungsabschnitts 611 des Buchsendeckels 61 die gewünschte Verpressung zwischen Lagerbuchse 60 und Buchsendeckel 61 erreicht ist. Hierbei kann beispielsweise vorgesehen sein, dass das Aufpressen bis zu einem definierten Anschlag an der Lagerbuchse 60 erfolgt, damit sich ein gezielter axialer Freiraum für die Nockenscheibe 4 und die Kulissenscheibe 5 ergibt. Alternativ erfolgt das Aufpressen vollständig bis zu der Kulissenscheibe 5, damit kein axiales Spiel zwischen Kulissenscheibe 5 und Nockenscheibe 4 vorhanden ist.

Gegebenenfalls ist das Material der Lagerbuchse 60 steifer als Material des Buchsendeckels 61, sodass der Buchsendeckel 61 beim Aufpressen zunächst nur punktuell mit dem Hülsenabschnitt 601 der Lagerbuchse 60 verbunden und dann beim Aufpressen gezielt abgeflacht wird. In jedem Fall ist über den aufgebrachten Buchsendeckel 61 eine Dichtfläche 6A zwischen der Lagerbuchse 60 und dem Buchsendeckel 61 hergestellt, über die hinweg keine Flüssigkeit an der Lagerbuchse 60 entlang in den Lagerraum L und zu den Verstellteilen 4, 5 gelangen kann.

Für die zusätzliche Abdichtung des Buchsendeckels 61 gegen die Zahnplatte 3 ist ein weiteres Dichtungselement in Form eines Dichtungsrings 7.2 vorgesehen. Dieser Dichtungsring 7.2 ist an einem radial kragenförmig vorstehenden Lagerabschnitt 612 des Buchsendeckels 61 angeordnet und stützt sich bei aufgesetzter Zahnplatte 3 an dem deckelseitigen Lagerabschnitt 612 und dem Lagerabschnitt 612 gegenüberliegend an einer um die Verstellachse M umlaufenden Lagerfläche 36 der Zahnplatte 3 ab. Die Lagerfläche 36 ist dabei ebenfalls dem Lagerraum L des Rastbeschlags 1 zugewandt und verläuft um eine Durchgangsöffnung 31 der Zahnplatte 3, in der der Fixierungsabschnitts 611 des Buchsendeckels 61 vollständig aufgenommen ist. Derart steht der Buchsendeckel 61 axial an dem Rastbeschlag 1 nicht vor. Gleiches gilt für die Lagerbuchse 60 an der Führungsplatte 2.

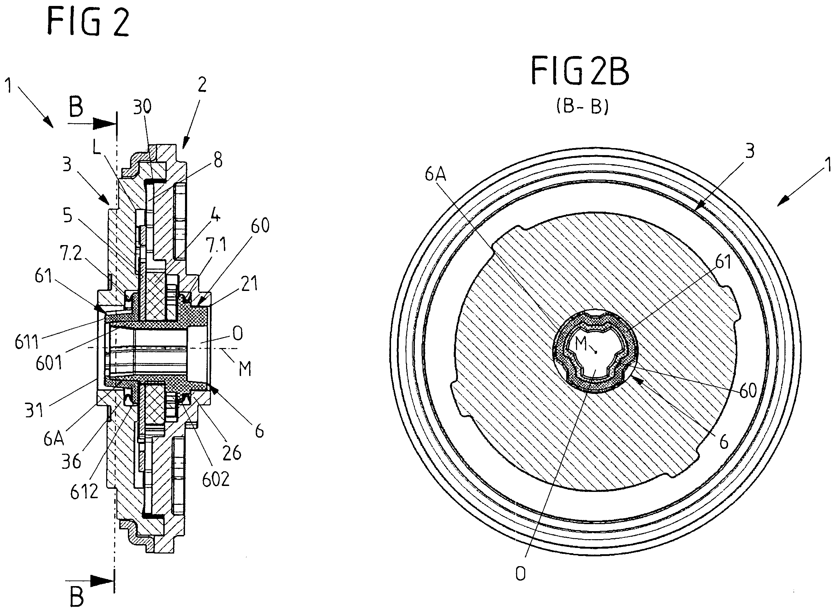

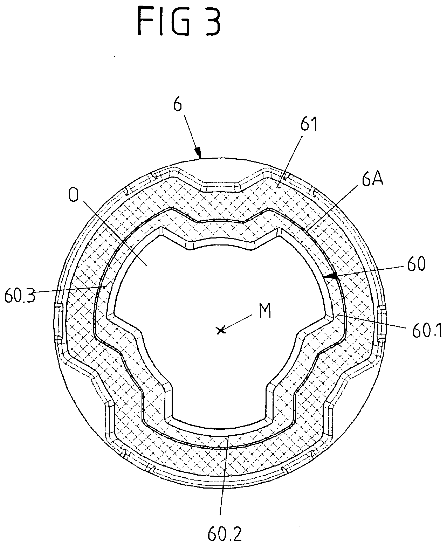

Die Lagerbuchse 60 definiert entsprechend den Darstellungen der Figuren 2B und 3 eine Innenkontur für eine Wellenöffnung O des Rastbeschlags 1 mit mehreren Formschlussbereichen 60.1, 60.2 und 60.3. In diese Wellenöffnung O kann eine Betätigungswelle formschlüssig eingreifen, um die Buchsenbaugruppe 6 um die Verstellachse M zu drehen und hierüber auf die Kulissenscheibe 5 und die Nockenscheibe 4 einzuwirken und die Verriegelungselemente 8 zwischen ihrer Entriegelungsposition und ihrer Verriegelungsposition zu verstellen. Die Buchsenbaugruppe 6 mit der Lagerbuchse 60 und dem Buchsendeckel 61 stellt somit die Schnittstelle für ein Betätigungselement zur Betätigung des Rastbeschlags 1 bereit.

Gleichwohl dies in den Figuren nicht dargestellt ist, kann der Rastbeschlag 1 selbstverständlich mindestens ein Federelement oder mehrere Federelemente innerhalb des Lagerraums L umfassen, über die die Verriegelungselemente 8 in ihre jeweilige Verriegelungsposition vorgespannt sind und/oder über die die Nockenscheibe 4 oder die Kulissenscheibe 5 um die Verstellachse M vorgespannt ist.

Zur Erleichterung des Aufpressens des Buchsendeckels 61 kann die Lagerbuchse 60 an ihrem in Richtung der Zahnplatte 3 liegenden axialen Ende eine Fase von gegebenenfalls nur wenigen Grad aufweisen. Alternativ oder ergänzend kann die innere Kontur des Buchsendeckels 61 grundsätzlich mit der äußeren Kontur des Hülsenabschnitts 601 der Lagerbuchse 60 korrespondieren, jedoch an mindestens einer Stelle einen kleineren Querschnitt aufweisen, um eine Presspassung zu ermöglichen und zu verhindern, dass bei einer Tauchbadlackierung des Rastbeschlags 1 über die Buchsenbaugruppe 6 Lack in den Lagerraum L und insbesondere an die Kulissenscheibe 5 und die Nockenscheibe 4 gelangen kann.

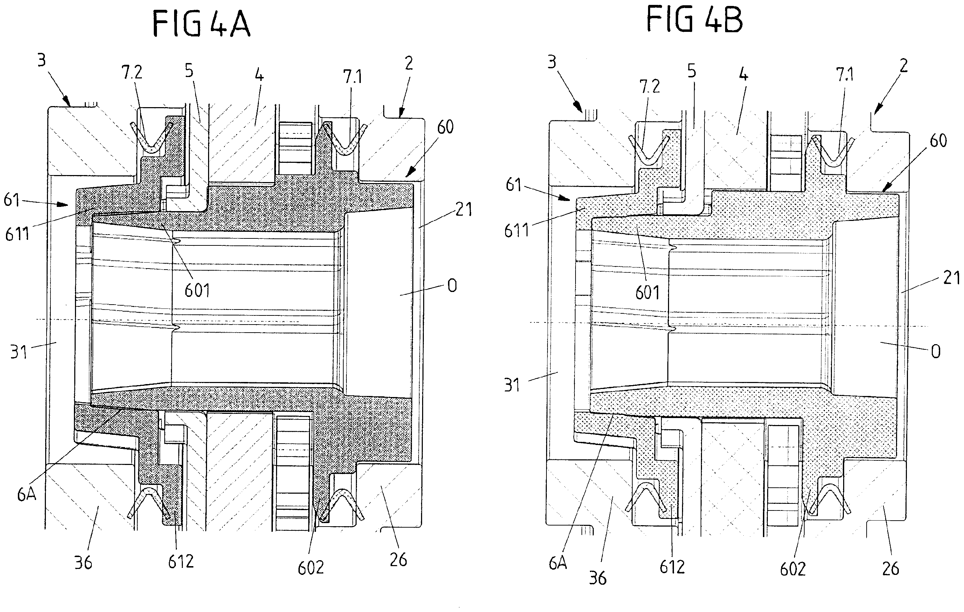

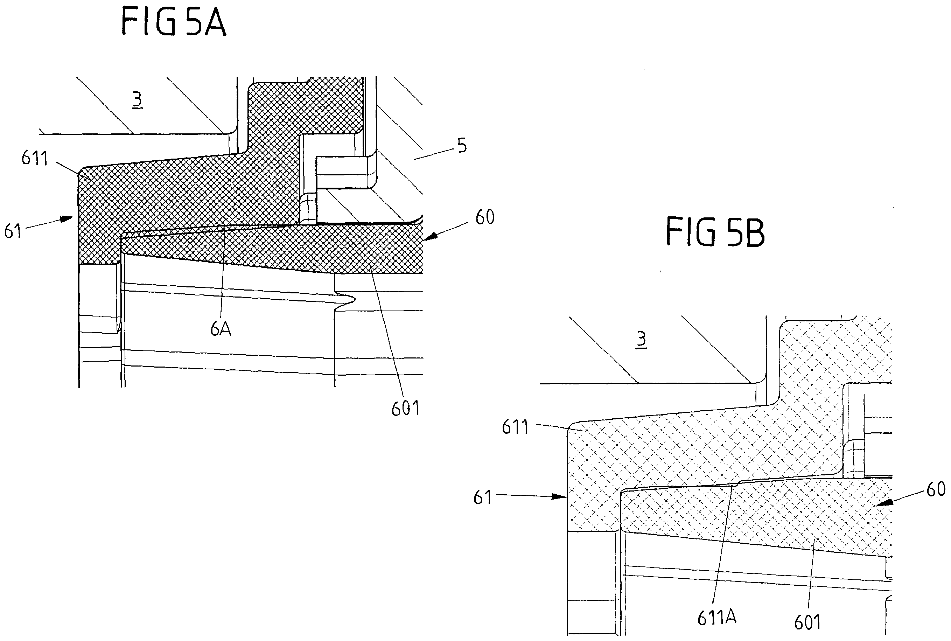

Die Figuren 4A und 5A zeigen eine Ausführungsvariante, bei der der Buchsendeckel 61 über eine Übermaßpassung und unter elastischer Verformung des Fixierungsabschnitts 611 des Buchsendeckels 61 und des Hülsenabschnitt 601 der Lagerbuchse 60 aufgepresst wird. Die Presspassung ist hierbei um die Verstellachse M umlaufend vorgesehen, sodass der Buchsendeckel 61 umfangsseitig flächig entlang der Dichtfläche 6A an der äußeren Mantelfläche des Hülsenabschnitt 601 anliegt.

Die Figuren 4B, 5B, 6 und 7 zeigen ferner eine Ausführungsvariante, bei der der Buchsendeckel 61 unter plastischer Deformation auf den Hülsenabschnitt 601 der Lagerbuchse 60 aufgepresst ist. Hierbei bildet der Buchsendeckel 61 an seinem Fixierungsabschnitt 611 innenseitig und entlang des Umfangs umlaufend eine Quetschkontur 611A aus. Diese ringförmig umlaufende Quetschkontur 611A oder eine ringförmig umlaufende Schaberippe wird beim Aufpressen des Buchsendeckels 61 auf den Hülsenabschnitt 601 der Lagerbuchse 60 plastisch verformt, sodass die Presspassung zwischen Lagerbuchse 60 und Buchsendeckel 61 sichergestellt und die Dichtfläche 6A ausgebildet wird.

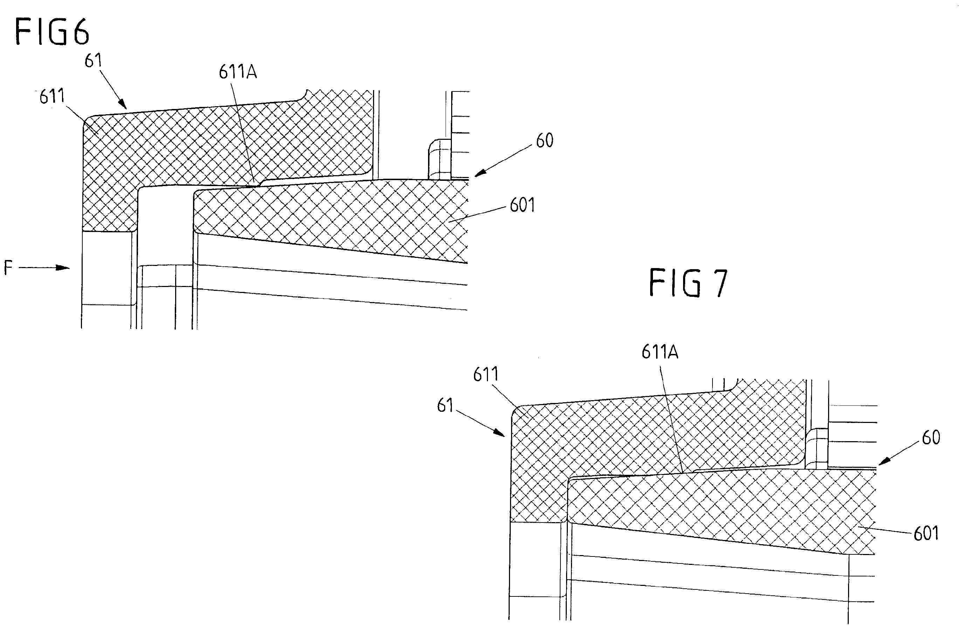

Hierbei veranschaulichen die im vergrößertem Maßstab dargestellten Schnittdarstellungen der Figuren 6 und 7 das Aufpressen des Buchsendeckels 61 entlang der Verstellachse M auf die Lagerbuchse 60. Durch eine längs aufgebrachte Montagekraft F wird die radial nach innen vorstehende Quetschkontur 611 A des Buchsendeckels 61 im Kontakt mit dem Hülsenabschnitt 601 der Lagerbuchse 60 plastisch verformt, sodass der Buchsendeckel 61 im Bereich der Quetschkontur 611A flächig (unter Ausbildung der Dichtfläche 6A) an der äußeren Mantelfläche des Hülsenabschnitts 601 kraftschlüssig anliegt.

### Bezugszeichenliste

- 1: Rastbeschlag (Beschlaganordnung)
- 2: Führungsplatte (Beschlagteil)
- 21: Durchgangsöffnung
- 26: Lagerfläche
- 3: Zahnplatte (Beschlagteil)
- 30: Innenverzahnung
- 31: Durchgangsöffnung
- 36: Lagerfläche
- 4: Nockenscheibe (Verstellteil)
- 5: Kulissenscheibe (Verstellteil)
- 6: Buchsenbaugruppe
- 60: Lagerbuchse (Buchsenelement)
- 60.1, 60.2, 60.3: Formschlussbereich
- 601: Hülsenabschnitt
- 602: Lagerabschnitt
- 61: Buchsendeckel (Deckelelement)
- 611: Fixierungsabschnitt
- 611A: Quetschkontur
- 612: Lagerabschnitt
- 6A: Dichtfläche
- 7.1,7.2: Dichtungsring
- 8: Verriegelungselement
- L: Lagerraum
- M: Verstellachse
- O: Wellenöffnung

## Patentansprüche

1. Beschlaganordnung für einen Fahrzeugsitz, mit
- zwei Beschlagteilen (2, 3), die einen Lagerraum (L) definieren und um eine Verstellachse (M) relativ zueinander verstellbar sind,
- mindestens ein Verriegelungselement (8), das innerhalb des Lagerraums (L) an einem der zwei Beschlagteile (2, 3) bezüglich der Verstellachse (M) radial zwischen einer Entriegelungsposition und einer Verriegelungsposition verstellbar ist, wobei die zwei Beschlagteile (2, 3) in der Entriegelungsposition relativ zueinander verschwenkbar sind und in der Verriegelungsposition drehfest miteinander verriegelt sind, und
- mindestens einem innerhalb des Lagerraums (L) schwenkbar gelagerten Verstellteil (4, 5) zur Verstellung des mindestens einen Verriegelungselements (8) zwischen der Entriegelungsposition und der Verriegelungsposition,
wobei das mindestens eine Verstellteil (4, 5) an einem Buchsenelement (60) der Beschlaganordnung (1) gelagert ist, auf das ein zur Abdichtung des Lagerraums (L) vorgesehenes Deckelelement (61), bezogen auf die Verstellachse (M), axial aufgesteckt ist,
**dadurch gekennzeichnet, dass**
das Deckelelement (61) an dem mindestens einen Verstellteil (4, 5) anliegt.

2. Beschlaganordnung nach Anspruch 1, **dadurch gekennzeichnet, dass** über eine äußere Kontur eines Abschnitts (601) des Buchsenelements (60), an den das Deckelelement (61) aufgesteckt ist, und eine innere Kontur eines Abschnitts (611) des Deckelelements (61), mit dem das Deckelelement (61) an das Buchsenelement (60) gesteckt ist, eine Dichtfläche (6A) ausgebildet ist, über die ein Eindringen von Flüssigkeit an dem Buchsenelement (60) entlang zu den Verstellteilen verhindert ist, insbesondere wobei sich die innere Kontur des an das Buchsenelement (60) gesteckten Abschnitts (611) des Deckelelements (61) an mindestens einem Bereich bezogen auf die Verstellachse (M) radial verjüngt.

3. Beschlaganordnung nach Anspruch 1 oder 2, **dadurch gekennzeichnet, dass** das Deckelelement (61) auf einen Abschnitt (601) des Buchsenelements (60) aufgepresst ist.

4. Beschlaganordnung nach einem der vorhergehenden Ansprüche, **dadurch gekennzeichnet, dass** an dem Buchsenelement (60) und/oder dem Deckelelement (61) mindestens ein Dichtelement (7.1, 7.2) angeordnet ist.

5. Beschlaganordnung nach Anspruch 4, **dadurch gekennzeichnet, dass** das mindestens eine Dichtelement (7.1) an einem Lagerabschnitt (601) des Buchsenelements (60) und an einer Lagerfläche (26) eines Beschlagteils (2) anliegt.

6. Beschlaganordnung nach Anspruch 4, **dadurch gekennzeichnet, dass** das mindestens eine Dichtelement (7.2) an einem Lagerabschnitt (611) des Deckelelements (61) und an einer Lagerfläche (326) eines Beschlagteils (3) anliegt.

7. Beschlaganordnung nach den Ansprüchen 5 und 6, **dadurch gekennzeichnet, dass** mindestens ein erstes Dichtelement (7.1) vorgesehen ist, das an dem Lagerabschnitt (601) des Buchsenelements (60) und an der Lagerfläche (26) eines ersten Beschlagteils (2) der zwei Beschlagteile (2, 3) anliegt, und mindestens ein zweites Dichtelement (7.2) vorgesehen ist, das an dem Lagerabschnitt (611) des Deckelelements (35) und an der Lagerfläche (36) eines zweiten Beschlagteils (3) anliegt.

8. Beschlaganordnung nach einem der Ansprüchen 5 bis 7, **dadurch gekennzeichnet, dass** die Lagerfläche dem Lagerraum (L) zugewandt ist.

9. Beschlaganordnung nach einem der Ansprüche 4 bis 8, **dadurch gekennzeichnet, dass** das Dichtelement (7.1, 7.2) einen Dichtring aufweist.

10. Beschlaganordnung nach einem der vorhergehenden Ansprüche, **dadurch gekennzeichnet, dass** das Buchsenelement (60) eine Wellenöffnung (O) für die formschlüssige Verbindung eines Betätigungselements mit der Beschlaganordnung (1) definiert und / oder das Buchsenelement (60) im Querschnitt eine Au ßenkontur mit mindestens zwei radial vorspringenden Formschlussbereichen (60.1, 60.2, 60.3) aufweist.

11. Beschlaganordnung nach einem der vorhergehenden Ansprüche, **dadurch gekennzeichnet, dass** die Beschlaganordnung (1) mit
- den zwei Beschlagteilen (2, 3),
- dem mindestens einen Verriegelungselement (8),
- dem mindestens einen Verstellteil (4, 5) und
- einer Buchsenbaugruppe (6) mit dem Buchsenelement (60) und dem Deckelelement (61)
eine vormontierte Baueinheit bildet.

12. Verfahren zur Montage einer Beschlaganordnung (1) für einen Fahrzeugsitz, aufweisend wenigstens die folgenden Schritte:
- Bereitstellen eines ersten Beschlagteils (2), eines zweiten Beschlagteils (3), mindestens eines Verriegelungselements (8), mindestens eines Verstellteils (4, 5) und einer Buchsenbaugruppe (6) mit einem Buchsenelement (60) und einem Deckelelement (61),
- Anordnen des Buchsenelements (60) in einer Durchgangsöffnung (21) des ersten Beschlagteils (2),
- Anordnen des mindestens einen Verriegelungselements (8) an dem ersten Beschlagteil (2) und des mindestens einen Verstellteils (4, 5) an dem Buchsenelement (60) derart, dass über eine Drehung des mindestens einen Verstellteils (4, 5) um eine durch das Buchsenelement (60) definierte Verstellachse (M) das mindestens eine Verriegelungselement (8) zwischen einer Entriegelungsposition und einer Verriegelungsposition radial verstellbar ist,
- Anstecken des Deckelelements (61) an das Buchsenelement (60) entlang der Verstellachse (M), wobei das Deckelelement (61) auf einen Abschnitt (601) des Buchsenelements (60) bis zu einem an dem Buchsenelement (60) definierten Anschlag aufgepresst wird, wobei das Deckelelement (61) an dem Buchsenelement (60) gegen das mindestens eine Verstellteil (4, 5) gepresst wird, um ein axiales Spiel des mindestens einen Verstellteils (4, 5) auszuschließen, und
- Anordnen des zweiten Beschlagteils (3) an dem ersten Beschlagteil (2) unter Ausbildung eines Lagerraums (L) zwischen dem ersten Beschlagteil (2) und dem zweiten Beschlagteil (3), in dem das mindestens eine Verriegelungselement (8) und das mindestens eine Verstellteil (4, 5) aufgenommen sind.

13. Verfahren nach Anspruch 12, **dadurch gekennzeichnet, dass** ein Abschnitt (611) des Deckelelements (61), über den das Deckelelement (61) an das Buchsenelement (60) gesteckt ist, bei der Anordnung des zweiten Beschlagteils (3) an dem ersten Beschlagteil (2) in einer Durchgangsöffnung (31) des zweiten Beschlagteils (3) aufgenommen wird.

14. Verfahren nach Anspruch 12, **dadurch gekennzeichnet, dass** das Deckelelement (61) unter elastischer Verformung sowohl des Deckelelements (61) als auch des Buchsenelements (60) aufgepresst wird oder das Deckelelement (61) unter plastischer Deformation mindestens einer an dem Deckelelement (61) oder dem Buchsenelement (60) ausgebildeten Quetschkontur (611A) oder Schaberippe aufgepresst wird.

15. Verfahren nach einem der Ansprüche 12 bis 14, **dadurch gekennzeichnet, dass** zwischen dem ersten Beschlagteil (2) und dem Buchsenelement (60) mindestens ein erstes Dichtelement (7.1) und/oder zwischen dem Deckelelement (61) und dem zweiten Beschlagteil (3) mindestens ein zweites Dichtelement (7.2) angeordnet wird.

## Claims

1. A fitting arrangement for a vehicle seat, comprising
- two fitting parts (2, 3), which define a bearing space (L) and are adjustable relative to each other about an adjustment axis (M),
- at least one locking element (8), which within the bearing space (L) on one of the two fitting parts (2, 3) is radially adjustable with respect to the adjustment axis (M) between an unlocking position and a locking position, wherein in the unlocking position the two fitting parts (2, 3) are pivotable relative to each other and in the locking position are non-rotatably locked to each other, and
- at least one adjuster part (4, 5) pivotally mounted within the bearing space (L) for adjusting the at least one locking element (8) between the unlocking position and the locking position,
wherein the at least one adjuster part (4, 5) is mounted on a bush element (60) of the fitting arrangement (1), on which a cover element (61) provided for sealing the bearing space (L) is attached axially with respect to the adjustment axis (M),
**characterized in that**
the cover element (61) rests against the at least one adjuster part (4, 5).

2. The fitting arrangement according to claim 1, **characterized in that** via an outer contour of a portion (601) of the bush element (60), to which the cover element (61) is attached, and an inner contour of a portion (611) of the cover element (61), with which the cover element (61) is attached to the bush element (60), a sealing surface (6A) is formed, via which an ingress of liquid along the bush element (60) towards the adjuster parts is prevented, in particular wherein the inner contour of the portion (611) of the cover element (61), which is attached to the bush element (60), is tapered radially with respect to the adjustment axis (M) on at least one area.

3. The fitting arrangement according to claim 1 or 2, **characterized in that** the cover element (61) is pressed onto a portion (601) of the bush element (60).

4. The fitting arrangement according to any of the preceding claims, **characterized in that** on the bush element (60) and/or the cover element (61) at least one sealing element (7.1, 7.2) is arranged.

5. The fitting arrangement according to claim 4, **characterized in that** the at least one sealing element (7.1) rests against a bearing portion (601) of the bush element (60) and against a bearing surface (26) of a fitting part (2).

6. The fitting arrangement according to claim 4, **characterized in that** the at least one sealing element (7.2) rests against a bearing portion (611) of the cover element (61) and against a bearing surface (326) of a fitting part (3).

7. The fitting arrangement according to claims 5 and 6, **characterized in that** at least one first sealing element (7.1) is provided, which rests against the bearing portion (601) of the bush element (60) and against the bearing surface (26) of a first fitting part (2) of the two fitting parts (2, 3), and at least second sealing element (7.2) is provided, which rests against the bearing portion (611) of the cover element (35) and against the bearing surface (36) of a second fitting part (3).

8. The fitting arrangement according to any of claims 5 to 7, **characterized in that** the bearing surface faces the bearing space (L).

9. The fitting arrangement according to any of claims 4 to 8, **characterized in that** the sealing element (7.1, 7.2) includes a sealing ring.

10. The fitting arrangement according to any of the preceding claims, **characterized in that** the bush element (60) defines a shaft opening (O) for the positive connection of an actuating element to the fitting arrangement (1) and / or in cross-section the bush element (60) has an outer contour with at least two radially protruding form-fit areas (60.1, 60.2, 60.3).

11. The fitting arrangement according to any of the preceding claims, **characterized in that** the fitting arrangement (1) comprising
- the two fitting parts (2, 3),
- the at least one locking element (8),
- the at least one adjuster part (4, 5), and
- a bush assembly (6) comprising the bush element (60) and the cover element (61)
forms a premounted construction unit.

12. A method for assembly of a fitting arrangement (1) for a vehicle seat, including at least the following steps:
- providing a first fitting part (2), a second fitting part (3), at least one locking element (8), at least one adjuster part (4, 5) and a bush assembly (6) comprising a bush element (60) and a cover element (61),
- arranging the bush element (60) in a through opening (21) of the first fitting part (2),
- arranging the at least one locking element (8) on the first fitting part (2) and the at least one adjuster part (4, 5) on the bush element (60) in such a way that via a rotation of the at least one adjuster part (4, 5) about an adjustment axis (M) defined by the bush element (60) the at least one locking element (8) is radially adjustable between an unlocking position and a locking position,
- attaching the cover element (61) to the bush element (60) along the adjustment axis (M), wherein the cover element (61) is pressed onto a portion (601) of the bush element (60) on up to a stop defined on the bush element (60), wherein the cover element (61) on the bush element (60) is pressed against the at least one adjuster part (4, 5) in order to exclude an axial clearance of the at least one adjuster part (4, 5), and
- arranging the second fitting part (3) on the first fitting part (2) by forming a bearing space (L) between the first fitting part (2) and the second fitting part (3), in which the at least one locking element (8) and the at least one adjuster part (4, 5) are received.

13. The method according to claim 12, **characterized in that** a portion (611) of the cover element (61), via which the cover element (61) is attached to the bush element (60), is received in a through opening (31) of the second fitting part (3) when the second fitting part (3) is arranged on the first fitting part (2).

14. The method according to claim 12, **characterized in that** the cover element (61) is pressed on by elastic deformation both of the cover element (61) and of the bush element (60) or the cover element (61) is pressed on by plastic deformation of at least one squeeze contour (611A) or scraper rib formed on the cover element (61) or the bush element (60).

15. The method according to any of claims 12 to 14, **characterized in that** between the first fitting part (2) and the bush element (60) at least one first sealing element (7.1) is arranged and/or between the cover element (61) and the second fitting part (3) at least one second sealing element (7.2) is arranged.

## Revendications

1. Système d'armature pour un siège de véhicule, avec
- deux pièces d'armature (2, 3), qui définissent un espace d'appui (L) et peuvent être déplacées l'une par rapport à l'autre autour d'un axe de déplacement (M),
- au moins un élément de verrouillage (8), qui peut se déplacer à l'intérieur de l'espace d'appui (L) sur une des deux pièces d'armature (2, 3) par rapport à l'axe de déplacement (M) radialement entre une position de déverrouillage et une position de verrouillage, dans lequel les deux pièces d'armature (2, 3) dans la position de déverrouillage peuvent pivoter l'une par rapport à l'autre et dans la position de verrouillage sont verrouillées l'une avec l'autre de manière solidaire en rotation, et
- au moins une pièce de déplacement (4, 5) montée de manière à pouvoir pivoter à l'intérieur de l'espace d'appui (L) pour le déplacement du au moins un élément de verrouillage (8) entre la position de déverrouillage et la position de verrouillage,
dans lequel la au moins une pièce de déplacement (4, 5) est montée sur un élément de douille (60) du système d'armature (1), sur lequel un élément de recouvrement (61) prévu pour l'étanchéification de l'espace d'appui (L) est enfiché axialement, par rapport à l'axe de déplacement (M),
**caractérisé en ce que**
l'élément de recouvrement (61) s'applique sur la au moins une pièce de déplacement (4, 5).

2. Système d'armature selon la revendication 1, **caractérisé en ce qu'**une surface d'étanchéité (6A) est réalisée par l'intermédiaire d'un contour extérieur d'une partie (601) de l'élément de douille (60), sur laquelle l'élément de recouvrement (61) est enfiché, et d'un contour intérieur d'une partie (611) de l'élément de recouvrement (61), avec laquelle l'élément de recouvrement (61) est enfiché sur l'élément de douille (60), par l'intermédiaire de laquelle une pénétration de liquide sur l'élément de douille (60) le long des pièces de déplacement est empêchée, en particulier dans lequel le contour intérieur de la partie (611) de l'élément de recouvrement (61) enfichée sur l'élément de douille (60) sur au moins une zone s'amincit radialement par rapport à l'axe de déplacement (M).

3. Système d'armature selon la revendication 1 ou 2, **caractérisé en ce que** l'élément de recouvrement (61) est pressé sur une partie (601) de l'élément de douille (60).

4. Système d'armature selon l'une quelconque des revendications précédentes, **caractérisé en ce qu'**au moins un élément d'étanchéité (7.1, 7.2) est disposé sur l'élément de douille (60) et/ou l'élément de recouvrement (61).

5. Système d'armature selon la revendication 4, **caractérisé en ce que** le au moins un élément d'étanchéité (7.1) s'applique sur une partie d'appui (601) de l'élément de douille (60) et sur une surface d'appui (26) d'une pièce d'armature (2).

6. Système d'armature selon la revendication 4, **caractérisé en ce que** le au moins un élément d'étanchéité (7.2) s'applique sur une partie d'appui (611) de l'élément de recouvrement (61) et sur une surface d'appui (326) d'une pièce d'armature (3).

7. Système d'armature selon l'une quelconque des revendications 5 et 6, **caractérisé en ce qu'**au moins un premier élément d'étanchéité (7.1) est prévu, qui s'applique sur la partie d'appui (601) de l'élément de douille (60) et sur la surface d'appui (26) d'une première pièce d'armature (2) des deux pièces d'armature (2, 3), et au moins un deuxième élément d'étanchéité (7.2) est prévu, qui s'applique sur la partie d'appui (611) de l'élément de recouvrement (35) et sur la surface d'appui (36) d'une deuxième pièce d'armature (3).

8. Système d'armature selon l'une quelconque des revendications 5 à 7, **caractérisé en ce que** la surface d'appui est tournée vers l'espace d'appui (L).

9. Système d'armature selon l'une quelconque des revendications 4 à 8, **caractérisé en ce que** l'élément d'étanchéité (7.1, 7.2) présente une bague d'étanchéité.

10. Système d'armature selon l'une quelconque des revendications précédentes, **caractérisé en ce que** l'élément de douille (60) définit une ouverture d'arbre (O) pour la liaison par coopération de formes d'un élément d'actionnement au système d'armature (1) et/ou l'élément de douille (60) présente en section transversale un contour extérieur avec au moins deux zones de coopération de formes (60.1, 60.2, 60.3) faisant saillie radialement.

11. Système d'armature selon l'une quelconque des revendications précédentes, **caractérisé en ce que** le système d'armature (1) avec
- les deux pièces d'armature (2, 3),
- le au moins un élément de verrouillage (8),
- la au moins une pièce de déplacement (4, 5) et
- un module de douille (6) avec l'élément de douille (60) et l'élément de recouvrement (61)
forme une unité modulaire pré-assemblée.

12. Procédé pour le montage d'un système d'armature (1) pour un siège de véhicule, présentant au moins les étapes suivantes :
- la fourniture d'une première pièce d'armature (2), d'une deuxième pièce d'armature (3), d'au moins un élément de verrouillage (8), d'au moins une pièce de déplacement (4, 5) et d'un module de douille (6) avec un élément de douille (60) et un élément de recouvrement (61),
- la disposition de l'élément de douille (60) dans une ouverture de passage (21) de la première pièce d'armature (2),
- la disposition du au moins un élément de verrouillage (8) sur la première pièce d'armature (2) et de la au moins une pièce de déplacement (4, 5) sur l'élément de douille (60), de telle sorte que le au moins un élément de verrouillage (8) peut être déplacé radialement entre une position de déverrouillage et une position de verrouillage par l'intermédiaire d'une rotation de la au moins une pièce de déplacement (4, 5) autour d'un axe de déplacement (M) défini par l'élément de douille (60),
- l'enfichage de l'élément de recouvrement (61) sur l'élément de douille (60) le long de l'axe de déplacement (M), dans lequel l'élément de recouvrement (61) est pressé sur une partie (601) de l'élément de douille (60) jusqu'à une butée définie sur l'élément de douille (60), dans lequel l'élément de recouvrement (61) sur l'élément de douille (60) est pressé contre la au moins une pièce de déplacement (4, 5), afin d'exclure un jeu axial de la au moins une pièce de déplacement (4, 5), et
- la disposition de la deuxième pièce d'armature (3) sur la première pièce d'armature (2) avec réalisation d'un espace d'appui (L) entre la première pièce d'armature (2) et la deuxième pièce d'armature (3), dans laquelle le au moins un élément de verrouillage (8) et la au moins une pièce de déplacement (4, 5) sont reçus.

13. Procédé selon la revendication 12, **caractérisé en ce qu'**une partie (611) de l'élément de recouvrement (61), par l'intermédiaire de laquelle l'élément de recouvrement (61) est enfiché sur l'élément de douille (60), est reçue dans une ouverture de passage (31) de la deuxième pièce d'armature (3) lorsque la deuxième pièce d'armature (3) est disposée sur la première pièce d'armature (2).

14. Procédé selon la revendication 12, **caractérisé en ce que** l'élément de recouvrement (61) est pressé avec déformation élastique aussi bien de l'élément de recouvrement (61) que de l'élément de douille (60) ou l'élément de recouvrement (61) est pressé avec déformation plastique d'au moins un contour d'écrasement (611A) ou d'une nervure de raclage réalisé(e) sur l'élément de recouvrement (61) ou l'élément de douille (60).

15. Procédé selon l'une quelconque des revendications 12 à 14, **caractérisé en ce qu'**au moins un premier élément d'étanchéité (7.1) est disposé entre la première pièce d'armature (2) et l'élément de douille (60) et/ou au moins un deuxième élément d'étanchéité (7.2) entre l'élément de recouvrement (61) et la deuxième pièce d'armature (3).
